# EUROPEAN PATENT APPLICATION

(11) **EP 3 190 050 A1**
(43) Date of publication of application: **12.07.2017**
(21) Application number: 17150623.1
(22) Date of filing: 09.01.2017
(51) Int. Cl.: B64D 13/06, B64D 13/00, G01F 25/00, G01F 1/44, G01F 1/36, B64D 13/02, B64D 13/04

(54) **ECONOMICAL ENVIRONMENTAL CONTROL SYSTEM (ECS) SMART VENTURI**

(30) Priority: 06.01.2016 US 201614989257
(71) Applicant: Hamilton Sundstrand Corporation, Windsor Locks, CT 06096-1010 (US)
(72) Inventor: ARMY, Donald E., Enfield, CT 06082 (US); MALJANIAN, JR., John M., Farmington, CT 06085 (US)
(74) Representative: Hughes, Andrea Michelle

(57) **Abstract**

A matched venturi assembly is provided and includes a venturi component (20) configured to provide for fluid communication between an inlet (21) and an outlet (23), sensors (30) coupled to the venturi component and configured to generate readings of characteristics of fluid flows proceeding through the venturi component and a venturi controller (40), which is receptive of the readings from the sensors. The venturi controller is configured to interpret the readings and is trimmable in a test phase where fluid flows with known characteristics are flown through the venturi component and interpretations of the readings are calibrated in accordance with differences between the readings and the known characteristics.

## Description

### BACKGROUND OF THE DISCLOSURE

The subject matter disclosed herein relates to aircraft environmental control systems (ECS) and, more particularly, to an economical (ECO) ECS with a smart venturi.

The environmental control system (ECS) of an aircraft provides air supply, thermal control and cabin pressurization for the crew and passengers. Avionics cooling, smoke detection and fire suppression are also commonly considered part of an aircraft's environmental control system. Conventional ECS designs include ducts with venturi components and flow control valves that control fluid flows through the venturi components. The flow control valves are typically actuated in accordance with sensor readings taken from sensors installed on the venturi components. However, since the sensors are not calibrated to their corresponding venturi components, the sensor readings may be inaccurate. As such, the control of the flow control valves can be executed in a non-optimal manner.

### BRIEF DESCRIPTION OF THE DISCLOSURE

According to one aspect of the disclosure, a matched venturi assembly is provided and includes a venturi component configured to provide for fluid communication between an inlet and an outlet, sensors coupled to the venturi component and configured to generate readings of characteristics of fluid flows proceeding through the venturi component and a venturi controller, which is receptive of the readings from the sensors. The venturi controller is configured to interpret the readings and is trimmable in a test phase where fluid flows with known characteristics are flown through the venturi component and interpretations of the readings are calibrated in accordance with differences between the readings and the known characteristics.

In accordance with additional or alternative embodiments, readings calibrated in accordance with the differences between the readings and the known characteristics have a ±1% margin of error.

In accordance with additional or alternative embodiments, the venturi component includes an inlet with a first width, an outlet with a second width and a central section fluidly interposed between the inlet and the outlet with a third width that is narrower than the first and second widths.

In accordance with additional or alternative embodiments, the sensors are selected from a group consisting of pressure sensors, differential pressure sensors, temperature sensors and combinations thereof.

In accordance with additional or alternative embodiments, the venturi controller includes power supply, communication bus and calibration ports.

In accordance with additional or alternative embodiments, the matched venturi assembly further includes a thermal casing for at least the venturi controller.

According to another aspect of the disclosure, a system for controlling an actuator of a flow control valve of a duct is provided. The duct includes a venturi component fluidly interposable between upstream and downstream components and the system includes a first controller configured to output control commands to the actuator based on data relating to venturi component operations, a control assembly and a single connection. The control assembly includes a venturi assembly that includes the venturi component and sensors coupled to the venturi component and a second controller. The second controller is trimmable in a test phase where fluid flows with known characteristics are flown through the venturi component and interpretations of sensor readings are calibrated in accordance with differences between the readings and the known characteristics. The control assembly is configured to generate the data to be reflective of calibrated readings. The single connection provides for transmission of the data from the control assembly to the first controller.

In accordance with additional or alternative embodiments, the data has a ±1% margin of error.

In accordance with additional or alternative embodiments, the first controller includes an electronic controller with flow control valve command computation capability.

In accordance with additional or alternative embodiments, the sensors are selected from a group consisting of pressure sensors, differential pressure sensors, temperature sensors and combinations thereof.

In accordance with additional or alternative embodiments, the second controller includes a venturi controller.

In accordance with additional or alternative embodiments, the venturi controller includes an engineering conversion unit and a calibrated flow computation unit.

In accordance with additional or alternative embodiments, the venturi controller includes power supply, communication bus and calibration ports.

In accordance with additional or alternative embodiments, the system further includes a thermal casing for at least the venturi controller.

In accordance with additional or alternative embodiments, the single connection includes a single aircraft digital bus connection.

According to another aspect of the invention, a method of assembling a matched venturi assembly is provided. The method includes directing a fluid flow with known characteristics through a venturi component, taking readings of the fluid flow at sensors coupled to the venturi component and calibrating interpretations of the readings in accordance with differences between the readings and the known characteristics.

In accordance with additional or alternative embodiments, the calibrating includes tuning interpretations of a single type of the readings at a time.

In accordance with additional or alternative embodiments, the calibrating includes tuning interpretations of multiple types of the readings at a time.

In accordance with additional or alternative embodiments, the calibrating includes making reference to standard sensor readings.

In accordance with additional or alternative embodiments, the method further includes installing the matched venturi assembly in a flow control valve actuating system of a duct and controlling the flow control valve actuating system based on calibrated interpretations of the readings.

These and other advantages and features will become more apparent from the following description taken in conjunction with the drawings.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a side view of a matched venturi assembly in accordance with embodiments;
FIG. 2 is a schematic illustration of a system for controlling an actuator of a flow control valve in accordance with embodiments; and
FIG. 3 is a flow diagram illustrating a method of assembling a matched venturi assembly.

The detailed description explains embodiments of the disclosure, together with advantages and features, by way of example with reference to the drawings.

### DETAILED DESCRIPTION OF THE DISCLOSURE

As will be described below, a smart venturi assembly and system are provided and include a trimmable local controller, sensor package and venturi that are matched and calibrated to a known standard in order to minimize flow measurement inaccuracies. The use of the smart venturi assembly and system can be used in various applications, such as aircraft environmental control systems (ECSs) to reduce required cabin in-flows and system weights.

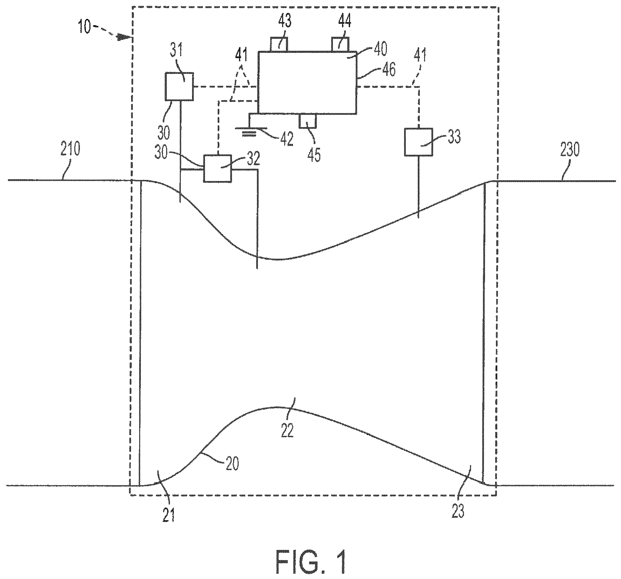

With reference to FIG. 1, a matched venturi assembly 10 is provided. The assembly 10 includes a venturi component 20 that has an inlet 21, a central section 22 and an outlet 23 and is configured to provide for fluid communication from the inlet 21, through the central section 22 and to the outlet 23. The inlet 21 has a first width and narrows steeply toward the central section with increasing axial distance from the inlet 21, the outlet 23 has a second width and widens over an extended length from the central section 22 and the central section 22 is fluidly interposed between the inlet 21 and the outlet 23 and has a third width that is narrower than the first and second widths.

The assembly 10 also includes sensors 30 and a venturi controller 40. The sensors 30 are coupled to the venturi component 20 at various locations and are configured to generate readings of characteristics of fluid flows proceeding through the venturi component 20. For example, the sensors 30 may include a static pressure sensor 31, which senses static pressures of fluids within the venturi component 20 at the location of the pressure sensor 31, a differential pressure sensor 32 that senses fluid pressure changes over an axial length of the venturi component 20 (e.g., from the inlet 21 to the central section 22) and a temperature sensor 33 that senses temperatures of fluids within the venturi component 20 at the location of the temperature sensor 33.

The venturi controller 40 is disposed in signal communication with and receptive of the readings from the sensors 30 (e.g., static pressure sensor 31, a differential pressure sensor 32 and temperature sensor 33). The venturi controller 40 is configured to interpret the readings and is also trimmable in a test phase. As shown in FIG. 1, in the test phase, the inlet 21 of the venturi component 20 is coupled to an outlet of an upstream duct 210 and the outlet 23 of the venturi component 20 is coupled to an inlet of a downstream duct 230. Fluid flows with known characteristics are then flown through the venturi component 20 from the upstream duct 210 to the downstream duct 230 under controlled conditions. As such, interpretations of the readings generated by the sensors 30 within the venturi controller 40 may be and are calibrated in accordance with differences between the readings and the known characteristics of the fluid flows.

As shown in FIG. 1, the venturi controller 40 may include respective connections 41 to the sensors 30 as well as a ground connection 42. The venturi controller 40 may also include a single power supply connection 43, a single aircraft communication bus or digital connection 44 and a calibration port 45. The calibration port 45 may be primarily employed during the test phase and serves as a connection port for a local computing device that can be used by an operator to control operations of the venturi controller 40 during the test phase in order to trim the venturi controller 40.

In accordance with further embodiments, the venturi controller 40 may also include a thermal casing 46. The thermal casing 46 may surround at least the venturi controller 40 during the test phase and field operations and serves to protect electronics within the venturi controller 40 from exposure to high pressures and temperatures. The thermal casing 46 may be formed of ceramic materials or other similar materials that tend to resist transmissions of thermal energy.

With the venturi controller 40 being trimmable in the manner described above, an effective accuracy of the readings of the sensors 30 (i.e., an accuracy of the interpretations of the readings) may be drastically improved. For example, in conventional venturi assemblies, readings of associated sensors or interpretations thereof are not calibrated and may exhibit reduced accuracy due to several factors including, but not limited to, electrical responsiveness of the sensors, manufacturing tolerances of the venturi component and assembly quality of the sensor/venturi combination. In accordance with the embodiments described herein, however, the venturi component 20, the sensors 30 and the venturi controller 40 are matched and calibrated together under the known and controlled conditions of the test phase. Therefore, the interpretation of the readings of the sensors 30 within the venturi controller 40 can take into account the factors that would otherwise reduce the accuracy of the effective readings of the sensors 30, to correspondingly improve the accuracy. Indeed, in accordance with embodiments, the margin of error of the accuracy of the effective readings of the sensors 30 may be reduced from ±6% to ±1%.

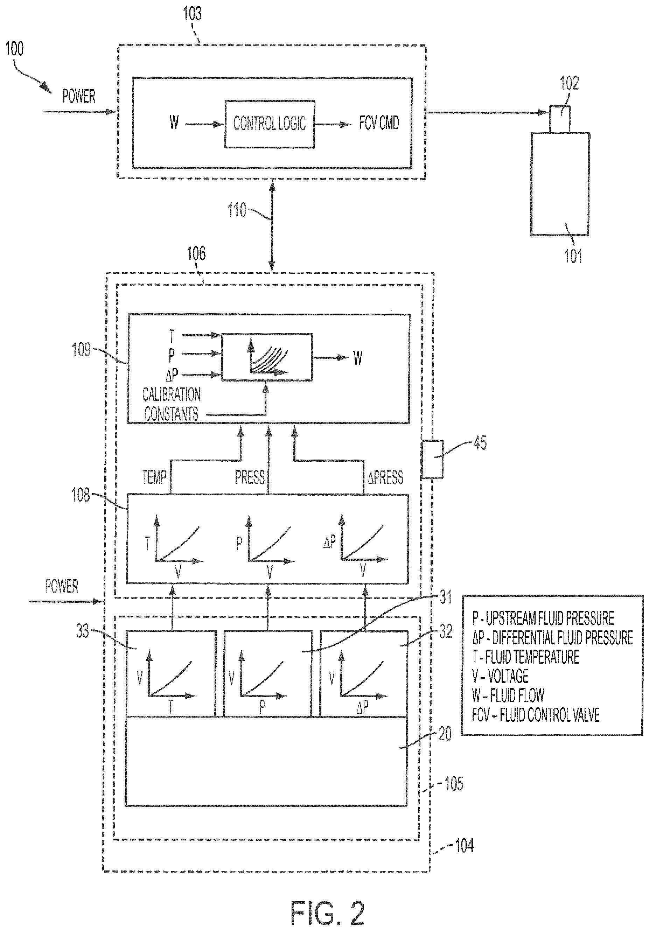

With reference to FIG. 2, a system 100 is provided for controlling an actuator of a flow control valve of a duct, such as the duct formed of the upstream duct 210, the venturi component 20 and the downstream duct 230 of FIG. 1. The system 100 may include a flow control valve 101 that controls or moderates characteristics of fluid flows through the duct, an actuator 102 that controls operations of the flow control valve 101 in accordance with received control commands, an electronic or first controller 103 and a control assembly 104. The first controller 103 has flow control valve command capability and is configured to output the control commands to the actuator 102 based on data relating to operations of the venturi component 20.

The control assembly 104 includes a venturi assembly 105 and a venturi or second controller 106. The venturi assembly 105 may include the venturi component 20 and the sensors 30 (e.g., static pressure sensor 31, a differential pressure sensor 32 and temperature sensor 33) as described above. The second controller 106 is similar to the venturi controller 40 described above and is trimmable in a manner similar to that of the venturi controller 40. That is, the second controller 106 is trimmable in a test phase where fluid flows with known characteristics are flown through the duct and the venturi component 20 and interpretations of readings received at the second controller 106 from the sensors 30 may be and are calibrated in accordance with differences between the readings and the known characteristics of the fluid flows.

In accordance with embodiments, the second controller 106 may include an engineering conversion unit 108 and a calibrated flow computation unit 109. The engineering conversion unit 108 serves to convert data input to the second controller 106 from each of the sensors 30 into corresponding data that is reflective of the readings of the sensors 30. That is, pressure data provided to the second controller 106 by the pressure sensor 31 is converted into pressure data readings by reference to voltage information within the engineering conversion unit 108. Similarly, temperature data provided to the second controller 106 by the temperature sensor 33 is converted into temperature data readings by reference to voltage information within the engineering conversion unit 108 and delta pressure data provided to the second controller 106 by the delta pressure sensor 32 is converted into delta pressure data readings by reference to voltage information within the engineering conversion unit 108. The calibrated flow computation unit 109 is configured to receive the pressure, delta pressure and temperature readings as a first input from the engineering conversion unit 108 and to receive derived calibration constants as a second input to generate the data to be reflective of calibrated readings.

That is, the control assembly 104 is configured to generate the data to be reflective of calibrated readings and this data, as noted above, may have a reduced margin of error of about 1% (down from the 6% level of conventional systems) and is associated with a correspondingly increased effective accuracy of the readings of the sensors 30.

The system 100 may further include a single connection 110 by which the data generated by the control assembly 104 is transmitted from the control assembly 104 to the first controller 103. In accordance with embodiments, this single connection 110 may be provided as a single aircraft communication bus or digital connection. For comparison, conventional electronic controllers are often coupled with venturi assemblies that are not characteristically matched with a controller by way of multiple hardwired connections. In such cases, each of the multiple hardwired connections may have up to five or more wires. That is, for conventional electronic controllers, one hardwired connection between temperature sensors and an engineering conversion unit may include five wires, one hardwired connection between static pressure sensors and an engineering conversion unit may include five wires and one hardwired connection between differential pressure sensors and an engineering conversion unit may include five wires. The single connection 110 of the system 100 is substantially simpler and less complex.

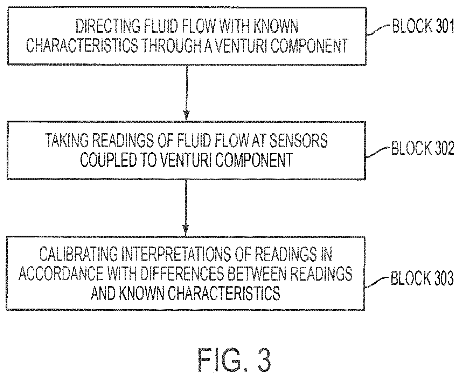

With reference to FIG. 3, a method of assembling a matched venturi assembly is provided and includes directing a fluid flow with known characteristics through a venturi component at Block 301, taking readings of the fluid flow at sensors coupled to the venturi component at Block 302 and calibrating interpretations of the readings in accordance with differences between the readings and the known characteristics at Block 303. In accordance with embodiments, the calibrating may involve the development of a custom calibration algorithm for each of the sensors 30 by any one or more of tuning interpretations of a single type of the sensor readings at a time, tuning interpretations of multiple types of the sensor readings at a time and by tuning interpretations of the sensor readings reference to standard sensor readings.

The method may also include installing the matched venturi assembly in a system, such as the system 100 of FIG. 2, and controlling the system based on calibrated interpretations of the readings of the sensors 30.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope of the claims. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A matched venturi assembly, comprising:
a venturi component (20) configured to provide for fluid communication between an inlet (21) and an outlet (23);
sensors (30) coupled to the venturi component and configured to generate readings of characteristics of fluid flows proceeding through the venturi component; and
a venturi controller (40), which is receptive of the readings from the sensors, the venturi controller being configured to interpret the readings and trimmable in a test phase where fluid flows with known characteristics are flown through the venturi component and interpretations of the readings are calibrated in accordance with differences between the readings and the known characteristics.

2. The matched venturi assembly according to claim 1, wherein readings calibrated in accordance with the differences between the readings and the known characteristics have a ±1% margin of error.

3. The matched venturi assembly according to claim 1 or 2, wherein the venturi component comprises:
an inlet (21) with a first width;
an outlet (23) with a second width; and
a central section (22) fluidly interposed between the inlet and the outlet with a third width that is narrower than the first and second widths.

4. The matched venturi assembly according to any preceding claim, wherein the sensors are selected from a group consisting of: pressure sensors (31), differential pressure sensors (32) and temperature sensors (33), and combinations thereof.

5. The matched venturi assembly according to any preceding claim, wherein the venturi controller comprises power supply (43), communication bus (44) and calibration ports (45).

6. The matched venturi assembly according to any preceding claim, further comprising a thermal casing (46) for at least the venturi controller.

7. A system for controlling an actuator of a flow control valve of a duct comprising a venturi component (20) fluidly interposable between upstream and downstream components, the system comprising:
a first controller (103) configured to output control commands to the actuator based on data relating to venturi component operations;
a control assembly (104) comprising a venturi assembly including the venturi component and sensors coupled to the venturi component and a second controller (107), which is trimmable in a test phase where fluid flows with known characteristics are flown through the venturi component and interpretations of sensor readings are calibrated in accordance with differences between the readings and the known characteristics,
the control assembly being configured to generate the data to be reflective of calibrated readings; and
a single connection (110) by which the data is transmitted from the control assembly to the first controller.

8. The system according to claim 7, wherein the data has a ±1% margin of error.

9. The system according to claim 7 or 8, wherein the first controller comprises an electronic controller with flow control valve command computation capability.

10. The system according to claim 7, 8 or 9, wherein the sensors are selected from the group consisting of: pressure sensors, differential pressure sensors and temperature sensors and combinations thereof.

11. The system according to any of claims 7 to 10, wherein the second controller comprises a venturi controller.

12. The system according to claim 11, wherein the venturi controller comprises an engineering conversion unit and a calibrated flow computation unit.

13. The system according to claim 11, wherein the venturi controller comprises power supply, communication bus and calibration ports.

14. The system according to claim 11, 12 or 13, further comprising a thermal casing (46) for at least the venturi controller.

15. The system according to any of claims 7 to 14, wherein the single connection comprises a single aircraft digital bus connection.
